(19) Europäisches Patentamt
European Patent Office
Office européen des brevets

(11) **EP 3 552 691 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(51) Int Cl.:
**B01D 61/42** (2006.01)   **C02F 1/469** (2006.01)
**C02F 5/10** (2006.01)

(21) Anmeldenummer: **19151873.7**

(22) Anmeldetag: **15.01.2019**

(54) **VORRICHTUNG UND VERFAHREN ZUR DEIONISATION EINES FLUIDS MIT DARIN GELÖSTEN IONEN, INSBESONDERE VON WASSER**

APPARATUS AND METHOD FOR DEIONISING A FLUID WITH DISSOLVED IONS, IN PARTICULAR WATER

DISPOSITIF ET PROCÉDÉ DE DÉIONISATION D'UN FLUIDE COMPORTANT DES IONS DISSOUS, EN PARTICULIER DE L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2018 DE 102018108339**

(43) Veröffentlichungstag der Anmeldung:
**16.10.2019 Patentblatt 2019/42**

(73) Patentinhaber: **Grünbeck Wasseraufbereitung GmbH**
**89420 Höchstädt a.d. Donau (DE)**

(72) Erfinder:
• **Meinardus, Martin**
**89231 Neu-Ulm (DE)**
• **Harlander, Peter**
**86405 Meitingen (DE)**

(74) Vertreter: **Charrier Rapp & Liebau**
**Patentanwälte PartG mbB**
**Fuggerstraße 20**
**86150 Augsburg (DE)**

(56) Entgegenhaltungen:
**CN-A- 106 830 227     DE-A1-102012 212 638**
**US-A1- 2012 298 153**

**Beschreibung**

Die Erfindung betrifft eine Vorrichtung zur Deionisation eines Fluids mit darin gelösten Ionen, insbesondere zur elektrochemischen Deionisation von Wasser, nach dem Oberbegriff des Anspruchs 1. Die Erfindung betrifft ferner ein Verfahren zur Deionisation eines Fluids, insbesondere zur elektrochemischen Deionisation von Wasser, nach dem Oberbegriff des Anspruchs 6.

Aus dem Stand der Technik sind verschiedene Verfahren zur Entsalzung bzw. Deionisation (Demineralisierung) von Flüssigkeiten, insbesondere von Wasser, bekannt, wie z.B. die Elektrodeionisation (EDI), die kapazitive Deionisation (CDI) und die membran-kapazitive Deionisation (MCDI). Bei der Elektrodeionisation handelt es sich um eine Kombination aus Ionenaustausch und Elektrodialyse, wobei das zu demineralisierende Fluid (bpsw. Wasser mit darin gelösten Ionen) einem Elektrodeionisationsmodul (EDI-Modul) zugeführt wird, um die im Fluid gelösten Stoffe (Ionen) aus dem Fluid zu entfernen. Das Fluid fließt dabei kontinuierlich in das Elektrodeionisationsmodul und darin senkrecht zu einem im Modul anliegenden elektrischen Feld durch Kammern, die jeweils von einer Anionenaustauschermembran und einer Kationenaustauschermembran begrenzt und mit einem Mischbettionenaustauscher gefüllt sind. Durch das elektrische Feld kommt es zu einer Ladungswanderung der gelösten Ionen zur jeweiligen Elektrode. Die Ionenaustauschermembranen erlauben dabei den Durchtritt von Anionen, während Kationen an der Durchdringung gehindert werden, und umgekehrt. Bei der Elektrodialyse findet schon bei der Diluatproduktion eine Konzentratbildung (Diffusion von Ionen durch Ionenaustauschermembranen) statt, wobei das während der Diluatproduktion erzeugte Konzentrat unmittelbar abgeführt oder in Konzentratkammern der Elektrodialysezelle gespeichert wird.

Bei der kapazitiven Deionisation wird das zu deionisierende Fluid zwischen zwei Elektroden (Anode und Kathode) durchgeführt, über die eine elektrische Potentialdifferenz angelegt ist. In dem Fluid gelöste Anionen wandern aufgrund der Potentialdifferenz zur positiv gepolten Anode und im Fluid gelösten Kationen wandern zur negativ gepolten Kathode. Die Elektroden können dabei aus einem porösen Material, bspw. poröser Kohlenstoff, gebildet sein und die Ionen (Anionen bzw. Kationen) sammeln sich in der Poren der jeweiligen Elektroden an. Bei der membran-kapazitiven Deionisation sind an den Elektroden Ionenaustauschermembrane angeordnet. An der Kathode ist dabei eine Kationenaustauschermembran und an der Anode ist eine Anionenaustauschermembran angeordnet.

Bei der kapazitiven bzw. der membrankapazitiven Deionisation sammeln sich die Ionen während einer Diluatproduktionsphase, in der die Anode positiv gepolt und die Kathode negativ gepolt ist, an den Ionenaustauschermembranen bzw. den Elektroden an, wodurch die Ionen aus dem Fluid entfernt werden. Das von den Ionen befreite Fluid wird als Diluat abgeführt. Zur Regenerierung der Elektroden bzw. der Ionenaustauschermembrane wird die Polung der Elektroden während einer Regenerierungs- bzw. Konzentratproduktionsphase umgekehrt, wodurch sich die an den Elektroden bzw. den Ionenaustauschermembranen haftenden Ionen ablösen und in dem während der Konzentratproduktionsphase durch das Modul strömende Fluid gelöst werden. Dadurch wird während der Konzentratproduktionsphase ein Konzentrat des Fluids mit einer hohen Konzentration darin gelöster Ionen erzeugt, während die Elektroden bzw. die Ionenaustauschermembranen für nachfolgende Diluatproduktionsphasen regeneriert werden.

CN 106830227 A, US2012/0298153 A1 und DE102012212638 A1 offenbaren Deionisationsmodule.

Das in den Elektrodeionisations- bzw. kapazitiven Deionisations-Verfahren während der Konzentratproduktionsphase erzeugte Konzentrat des Fluids mit einer hohen Konzentration der darin gelösten Ionen wird als Ausschuss abgeführt. Das in dem als Ausschuss abgeführten Konzentrat enthaltene Fluid kann nicht zur Erzeugung eines Diluats verwendet werden und verringert deshalb die Ausbeute des Deionisationsverfahrens.

Zur Verbesserung der Ausbeute eines kapazitiven Deionisationsverfahrens schlägt die EP 2 739 573 B1 eine Vorrichtung zur Rückgewinnung von deionisiertem Wasser aus einem Speisewasserstrom vor, in der der Speisewasserstrom in eine kapazitive Deionisierungszelle geleitet und darin bei Anlegung einer elektrischen Spannung an die Deionisierungszelle während einer Diluatproduktionsphase deionisiert wird, wobei während der Diluatproduktionsphase die Salzkonzentration des aus der Deionisierungszelle austretenden Wassers gemessen wird und über ein Mehrwegeventil, in Abhängigkeit der gemessenen Salzkonzentration, ein Recycling durch eine Rückführung des nur teilweise deionisierten Wassers in die Deionisierungszelle erfolgt, wenn die gemessene Salzkonzentration zwischen einem festgelegten unteren und einem oberen Sollwert liegt. Wenn die gemessene Salzkonzentration unter dem festgelegten unteren Sollwert liegt, wird das aus der Deionisierungszelle austretende Wasser als Diluatstrom (vollständig deionisiertes Wasser) abgeführt und wenn die gemessene Salzkonzentration über dem festgelegten oberen Sollwert liegt, wird das aus der Deionisierungszelle austretende Wasser zurückgewiesen und als Abwasser abgeführt.

Mit dieser Vorrichtung kann die Ausbeute der Deionisation, also der Anteil des zugeführten Speisewasserstroms, der (gemäß der Vorgabe des unteren Sollwerts der Salzkonzentration) vollständig deionisiert werden konnte, erhöht werden. Allerdings wird auch bei dieser Vorrichtung während einer Konzentratproduktionsphase, in der die kapazitive Deionisierungszelle regeneriert wird, eine erhebliche Menge von Konzentrat erzeugt, das als Ausschuss verworfen werden muss und nicht als Diluat zur Verfügung steht, weil während der Konzentratproduktionsphase Wasser in die Deionisierungszelle geleitet und dort zum Konzentrat aufgesalzt wird.

Hiervon ausgehend liegt der Erfindung die Aufgabe zugrunde, die Ausbeute in einer Vorrichtung und einem Verfahren zur Deionisation eines Fluids mit darin gelösten Ionen weiter zu verbessern.

Diese Aufgabe wird mit einer Vorrichtung mit den Merkmalen des Anspruchs 1 und einem Verfahren mit den Merkmalen des Anspruchs 6 gelöst. Bevorzugte Ausführungsformen der Vorrichtung und des Verfahrens sind in den abhängigen Ansprüchen aufgezeigt.

Die erfindungsgemäße Vorrichtung umfasst wenigstens ein Deionisationsmodul, welches zur Deionisation eines Fluids mit darin gelösten Ionen in einer Diluatproduktionsphase und zur Regenerierung in einer Konzentratproduktionsphase betreibbar ist, sowie eine Zufuhreinrichtung zum Einleiten eines Feedstroms des Fluids in das Deionisationsmodul und eine Abfuhreinrichtung zum Abführen des zumindest teilweise deionisierten Fluids aus dem Deionisationsmodul als Diluatstrom oder als Recyclingstrom. Die Vorrichtung umfasst weiterhin eine Steuereinrichtung, welche so eingerichtet ist, dass sie das deionisierte Fluid aus dem Deionisationsmodul als Diluatstrom in der Diluatproduktionsphase abführt, wenn das deionisierte Fluid einen vorgegebenen Qualitätswert erfüllt, oder andernfalls das nur teilweise deionisierte Fluid aus dem Deionisationsmodul als Recyclingstrom zurück in das Deionisationsmodul leitet, so dass das nur teilweise deionisierte Fluid in dem Deionisationsmodul weiter deionisiert werden kann. Gemäß der Erfindung umfasst die Vorrichtung weiterhin einen mit dem Deionisationsmodul in Verbindung stehenden Zwischenspeicher, in den der Recyclingstrom geleitet und zwischengespeichert wird, wobei die Steuereinrichtung der erfindungsgemäßen Vorrichtung so eingerichtet ist, dass sie das Deionisationsmodul zur Regenerierung in der Konzentratproduktionsphase zumindest im Wesentlichen ohne Einleitung von Fluid in das Deionisationsmodul betreibt.

In der erfindungsgemäßen Vorrichtung und dem erfindungsgemäßen Verfahren erfolgt während der Konzentratproduktionsphase, in der das Deionisationsmodul regeneriert wird, zumindest im Wesentlichen keine Anströmung des Deionisationsmoduls durch das Fluid. Während der Konzentratproduktionsphase befindet sich deshalb zumindest im Wesentlichen nur das Volumen des Fluids in dem Deionisationsmodul, das bereits zu Beginn der Konzentratproduktionsphase in dem Deionisationsmodul enthalten war. Dieses Volumen des Fluids wird während der Konzentratproduktionsphase aufgesalzt, indem die an den Elektroden bzw. Membranen des Desionisationsmoduls angelagerten Ionen durch Anlegen einer elektrischen Spannung mit entgegengesetzter Polarität, verglichen mit der Polung der Elektroden während der Diluatproduktionsphase, abgelöst werden und sich in dem Volumen des Fluids, das sich während der Konzentratproduktionsphase im Deionisationsmodul befindet, lösen. Dadurch wird während der Konzentratproduktionsphase in dem Deionisationsmodul ein hochkonzentriertes Konzentrat erzeugt, welches nach Beendigung der Konzentrationsproduktionsphase als Ausschuss (Abwasser) abgeführt und beispielsweise in einen Abflusskanal geleitet werden kann.

Das Volumen des während der Konzentratproduktionsphase gebildeten Konzentrats entspricht dabei zumindest im Wesentlichen nur dem Volumen des Fluids, das sich bereits zu Beginn der Konzentratproduktionsphase im Deionisationsmodul befunden hat. Während der Konzentratproduktionsphase wird zumindest im Wesentlichen kein weiteres Fluid in das Deionisationsmodul eingeleitet. Aufgrund des geringen Volumens des während der Konzentratproduktionsphase in dem Deionisationsmodul gebildeten Konzentrats wird die Ausbeute des vollständig bzw. weitgehend deionisierten Fluids deutlich erhöht.

Zur Erhöhung der Ausbeute trägt dabei bei, dass der Zwischenspeicher im Vergleich zu dem Deionisationsmodul ein wesentlich größeres Aufnahmevolumen aufweist. Bevorzugt ist das Aufnahmevolumen des Zwischenspeichers um einen Faktor zwischen 10 und 2000 größer als das Aufnahmevolumen des Deionisationsmoduls. Besonders bevorzugt liegt das Verhältnis der Aufnahmevolumen des Zwischenspeichers und des Deionisationsmoduls zwischen 100 und 1000.

Das in dem Zwischenspeicher gespeicherte Fluid, welches als teilweise deionisierter Recyclingstrom während der Diluatproduktionsphase in den Zwischenspeicher geleitet und dort zwischengespeichert worden ist, kann nach Beendigung der Konzentratproduktionsphase verwendet werden, um das sich im Deionisationsmodul befindliche Konzentrat durch Verdrängung aus dem Deionisationsmodul als Konzentratstrom abzuleiten. Hierfür kann das sich im Zwischenspeicher befindliche Fluid nach Beendigung der Konzentratproduktionsphase beispielsweise durch eine Pumpe oder schwerkraftbedingt in das Deionisationsmodul eingeleitet werden, um das sich darin befindliche Konzentrat zu verdrängen und auszuleiten.

Zum Abführen des Konzentrats aus dem Deionisationsmodul nach Beendigung der Konzentratproduktionsphase ist es zur Aufrechterhaltung einer möglichst hohen Ausbeute vorteilhaft, wenn das sich im Zwischenspeicher befindliche Fluid nach der Konzentrationsproduktionsphase stufenweise in das Deionisationsmodul eingeleitet wird, um das sich darin befindliche Konzentrat durch Verdrängung abzuführen. Zweckmäßig wird hierfür nach Beendigung der Konzentratproduktionsphase ein Volumen des sich im Zwischenspeicher befindlichen Fluids in das Deionisationsmodul geleitet, welches dem Aufnahmevolumen (Kapazität) des Deionisationsmoduls entspricht. Das zum Abführen des Konzentrats aus dem Deionisationsmodul verwendete Volumen des Fluids wird zweckmäßig in der der Konzentratproduktionsphase nachfolgenden Diluatproduktionsphase wieder als Recyclingstrom in den Zwischenspeicher und von dort in das Deionisationsmodul geleitet, so dass dieses Volumen des Fluids in der nachfolgenden Diluatproduktionsphase in dem Deionisationsmodul deionisiert und als Diluatstrom aus dem Deionisationsmodul abgeführt werden kann.

In dem erfindungsgemäßen Verfahren kann das Fluid in dem Deionisationsmodul mittels elektrolytischer, elektrodialytischer, kapazitiver oder membrankapazitiver Verfahren während der Diluatproduktionsphase deionisiert werden, indem die im Fluid gelösten Ionen aus dem Fluid bspw. durch Adsorption an Elektroden oder Ionenaustauschermembranen des Deionisationsmoduls, entfernt werden. In der erfindungsgemäßen Vorrichtung ist entsprechend ein Deionisationsmodul vorgesehen, in dem ein elektrolytisches, elektrodialytisches, kapazitives oder membrankapazitives Deionisationsverfahren durchführbar ist. Das Deionisationsmodul kann bspw. ein Elektrodeionisationsmodul (EDI), ein kapazitives Deionisationsmodul (CDI) oder ein membrankapazitives Deionisationsmodul (MCDI) sein und wenigstens eine Deionisationszelle enthalten. Bevorzugt sind zur Erhöhung der Diluatmenge, die pro Zeiteinheit erzeugt werden kann, mehrere Deionisationszellen in dem Deionisationsmodul enthalten, die parallel betrieben werden.

Gemäß der Erfindung erfolgt dabei eine Förderung des Fluids in einem Kreislauf (Recycle-Betrieb), d.h. in der Diluatproduktionsphase wird das deionisierte Fluid aus dem Deionisationsmodul als Diluatstrom abgeführt, wenn das deionisierte Fluid einen vorgegebenen Qualitätswert erfüllt, und ansonsten im Kreislaufbetrieb wieder als Recyclingstrom zurück in das Deionisationsmodul geleitet. Bei dem vorgegebenen Qualitätswert kann es sich bspw. um einen Sollwert für die Leitfähigkeit (Leitwert) und/oder die Gesamt-Salzkonzentration und/oder die Härte des Fluids (ausgedrückt durch dH oder den Gehalt an härtebildenden Ionen, insbeondere Calcium- und Magnesium-Ionen) und/oder die Konzentration wenigstens eines im Fluid gelösten Ions (und dabei insbesondere der härtebildenden Ionen, wie Calcium- und Magnesium-Ionen) handeln. Wenn der vorgegebene Qualitätswert nicht erreicht wird, also bspw. ein als Obergrenze definierter Sollwert für die Salzkonzentration oder die Leitfähigkeit überschritten ist, wird das nur teilweise deionisierte Fluid aus dem Deionisationsmodul als Recyclingstrom abgeführt, in den Zwischenspeicher geleitet und von dort zurück in das Deionisationsmodul geführt, um den Restgehalt der im Fluid gelösten Ionen zu entfernen und das Fluid vollständig zu deionisieren. Eine zu erzielende vollständige Deionisation wird dabei durch den vorgegebenen Qualitätswert definiert.

Zur Erfassung des Qualitätswerts enthält die erfindungsgemäße Vorrichtung zweckmäßig eine Messeinrichtung, bspw. einen Leitfähigkeitssensor, eine Einrichtung zur Erfassung des pH-Werts und/oder des Redoxpotentials und/oder der Härte des Fluids oder einen Sensor zur Erfassung der gesamten Salzkonzentration oder der Konzentration wenigstens eines im Fluid gelösten Ions. Der von der Messeinrichtung erfasste Messwert wird in der Steuereinrichtung mit dem vorgegebenen Qualitätswert verglichen, um fest zu stellen, ob der Qualitätswert erfüllt ist und um zu steuern, ob das Fluid als Diluatstrom oder als Recyclingstrom aus dem Deionisationsmodul abgeführt wird.

Während der Diluatproduktionsphase erfolgt die Abführung des Diluatstroms bevorzugt nur solange, wie der vorgegebene Qualitätswert eingehalten wird und bis ein vorgegebenes mittleres Volumenniveau im Zwischenspeicher unterschritten wird. Der Diluatstrom kann dabei einem Diluattank zugeführt und darin für eine spätere Verwendung gespeichert oder direkt einer Verwendung des Diluats zugeführt werden. Der Diluatstrom wird während der Diluatproduktionsphase bevorzugt im Batchbetrieb aus dem Deionisationsmodul abgeführt und in einem Diluattank gespeichert oder direkt einer Verwendung des Diluats zugeführt.

Eine effiziente Abführung des während der Konzentratproduktionsphase in dem Deionisationsmodul aufgesalzten Fluids als Konzentratstrom kann erreicht werden, wenn nach der Konzentratproduktionsphase Fluid aus dem Zwischenspeicher, bevorzugt stufenweise, in das Deionisationsmodul geleitet wird. Dadurch wird das während der Konzentratproduktionsphase in dem Deionisationsmodul aufgesalzte Konzentrat verdrängt und dadurch aus dem Deionisationsmodul abgeführt. Zweckmäßig und energiesparend erfolgt dabei die Einleitung des Fluids in das Deionisationsmodul schwerkraftbedingt, indem der Zwischenspeicher oberhalb des Deionisationsmoduls angeordnet wird. Alternativ oder unterstützend kann das Fluid auch mittels einer Pumpe vom Zwischenspeicher in das Deionisationsmodul gefördert werden.

Beim Einsatz einer oder mehrerer Elektrodialysezelle(n) als Deionisationsmodul in dem erfindungsgemäßen Verfahren findet schon bei der Diluatproduktion auch eine Konzentratbildung (Diffusion von Ionen durch Ionenaustauschermembranen) statt. In dem erfindungsgemäßen Verfahren wird das während der Diluatproduktionsphase gebildete Konzentrat zunächst in Konzentratkammern des Deionisationsmoduls zwischengespeichert und erst bei der Regenerierung abgeführt. Unter Konzentratproduktionsphase wird dabei die Phase verstanden, in der zur Regenerierung der Elektrodialysezelle(n) das zwischengespeicherte Konzentrat als Konzentratstrom abgeführt wird.

Beim Einsatz eines kapazitiven Deionisationsmoduls (CDI) oder eines membrankapazitiven Deionisationsmoduls (MCDI) finden in der Diluatproduktionsphase des erfindungsgemäßen Verfahrens Adsorptionsvorgänge an den Elektroden statt und die Überführung der Ionen zurück ins Fluid unter Konzentratbildung findet erst bei der Regenerierung während der Konzentratproduktionsphase statt.

Der nach Beendigung der Konzentratproduktionsphase abgeführte Konzentratstrom kann als Ausschuss (Abwasser) in einen Ausguss geleitet oder einer Konditionierung zugeführt werden. Die Abführung des Konzentratstroms aus dem Deionisationsmodul erfolgt dabei zweckmäßig durch Verdrängung von Fluid aus dem Zwischenspeicher und so lange, bis ein vorgegebenes unteres Volumenniveau im Zwischenspeicher unterschritten wird. Dadurch kann die Ausbeute optimiert werden und es wird sichergestellt, dass nur möglichst wenig Fluid aus dem Zwischenspeicher, das bereits teilweise deionisiert worden ist, als Ausschuss verworfen wird und nicht mehr zur Erzeugung von Diluat genutzt werden kann. Nach Abführung des Konzentrats aus dem Deionisationsmodul kann wieder eine neue Diluatproduktionsphase begonnen werden, in der das Niveau des (bereits teilweise deionisierten) Fluids in dem Zwischenspeicher wieder bis zu einem oberen Volumenniveau aufgefüllt wird.

Um Ausfällungen in dem Konzentrat, das während der Konzentratproduktionsphase im Deionisationsmodul gebildet worden ist, zu verhindern, wird bevorzugt während und/oder nach der Konzentratproduktionsphase ein Konditionierungsmittel in das Deionisationsmodul dosiert. Das Konditionierungsmittel wirkt dabei als Komplexbildner für Metallionen oder - atome und/oder für härtebildende Ionen, insbesondere Calcium- und Magnesiumionen. Durch das Konditionierungsmittel werden die Metallionen oder -atome und/oder die härtebildenden Ionen komplexiert und es wird dadurch verhindert, dass die härtebildenden Ionen als Kalk ausfällen bzw. dass die metallischen Ionen oder Atome sich im Deionisationsmodul anlagern und dieses dadurch verunreinigen können, bspw. durch Kalkablagerungen oder durch Korrossion.

Bevorzugt handelt es sich bei dem Konditionierungsmittel um eine saure, wässrige Lösung, die insbesondere organische Säuren, wie z.B. Zitronen- und/oder Milchsäure, und/oder Komplexbildner, insbesondere zur Komplexbildung von Calcium- und Magnesiumionen, enthält. Derartige Konditionierungsmittel stehen bspw. als Klarspüler für Geschirrspülmaschinen zur Verfügung und sind kostengünstig erhältlich.

Diese und weitere Merkmale sowie Vorteile der erfindungsgemäßen Vorrichtung und des erfindungsgemäßen Verfahrens gehen aus den nachfolgend unter Bezugnahme auf die begleitenden Zeichnungen näher beschriebenen Ausführungsbeispielen hervor. Die Zeichnungen zeigen:

**Figur 1**: Schematische Darstellung eines ersten Ausführungsbeispiels einer erfindungsgemäßen Vorrichtung anhand eines Fließschemas;

**Figur 2:** Schematische Darstellung eines zweiten Ausführungsbeispiels einer erfindungsgemäßen Vorrichtung anhand eines Fließschemas;

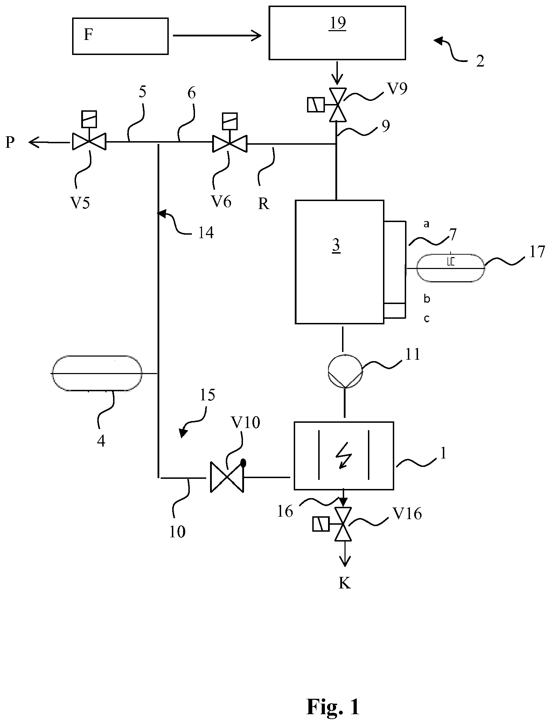

In Figur 1 ist ein erstes Ausführungsbeispiel einer erfindungsgemäßen Vorrichtung zur Deionisation eines Fluids mit darin gelösten Ionen anhand eines Fließschemas gezeigt. Es wird im Folgenden davon ausgegangen, dass die Vorrichtung zur Deionisation von Wasser eingesetzt wird. Die Vorrichtung kann jedoch in entsprechender Weise auch zur Entfernung von Ionen aus anderen Fluiden verwendet werden.

Die Vorrichtung umfasst eine Zufuhreinrichtung 2 zur Zuführung eines Feedstroms F des zu deionisierenden Wassers. Der Feedstrom F wird dabei zweckmäßig zunächst einer Aufbereitungseinrichtung 19 zugeführt, in der das Wasser durch Enthärtung aufbereitet wird. Bevorzugt ist die Voraufbereitungseinrichtung 19 so ausgebildet, dass eine Vollenthärtung des Wassers erfolgen kann. Bei der Aufbereitungseinrichtung 19 kann es sich beispielsweise um eine Enthärtungsanlage mit Ionenaustauschern oder um eine Umkehrosmoseanlage handeln.

Durch die Voraufbereitung (insb. eine vollständige oder teilweise Enthärtung) des Feedstroms in der Aufbereitungseinrichtung 19 liegen Natriumsalze (Natriumchlorid, -sulfat, -nitrat, - hydrogenkarbonat) im Feedstrom vor. Diese Salze weisen sehr hohe Löslichkeiten auf. Die mit dem erfindungsgemäßen Verfahren erzielbaren Ausbeuten werden dabei durch die entsprechenden Löslichkeitsgrenzen dieser Salze bestimmt.

Die Vorrichtung umfasst weiterhin einen Leitungskreislauf 14, der über eine Zufuhrleitung 9 mit einem darin angeordneten Ventil V9 mit der Zufuhreinrichtung 2 verbunden ist. In dem Leitungskreislauf 14 sind ein Deionisationsmodul 1, eine Abfuhreinrichtung 15, ein Zwischenspeicher 3 und (optional) eine Pumpe 11 angeordnet.

Das von der Zufuhreinrichtung 2 kommende, aufbereitete Wasser wird über die Zufuhrleitung 9 als Feedstrom F bei geöffnetem Ventil V9 in den Leitungskreislauf 14 eingeleitet und strömt dort zunächst in den Zwischenspeicher 3 und stromabwärts des Zwischenspeichers 3 in das Deionisationsmodul 1. Der Feedstrom F des Wassers wird dabei von der Pumpe 11 gefördert.

In dem Deionisationsmodul 1, bei dem es sich beispielsweise um ein Elektrodeionisationsmodul (EDI), ein kapazitives Deionisationsmodul (CDI) oder um ein membramkapazitives Deionisationsmodul (MCDI) handeln kann, wird das Wasser zumindest teilweise deionisiert, indem die restlichen Ionen, die noch in dem bereits aufbereiteten (insbesondere vollenthärteten) Wasser enthalten sind, auf elektrochemischem Wege aus dem Wasser entfernt werden. Hierfür werden beispielsweise die Elektroden eines CDI- bzw. eines MCDI-Moduls während einer Diluatproduktionsphase mit einer elektrischen Spannung beaufschlagt, wobei die Anode positiv und die Kathode negativ gepolt wird.

Zur Abführung des in dem Deionisationsmodul 1 zumindest teilweise deionisierten Fluids ist der Ausgang des Deionisationsmodul 1 mit einer Abfuhreinrichtung 15 verbunden. Die Abfuhreinrichtung 15 enthält dabei eine erste Abfuhrleitung 10, welche Bestandteil des Leitungskreislaufs 14 ist, sowie eine zweite Abfuhrleitung 16, die von dem Leitungskreislauf 14 wegführt. In der ersten Abfuhrleitung 10 sind ein Ventil V10 sowie eine Messeinrichtung 4 angeordnet. In der zweiten Abfuhrleitung 16 ist ein Ventil V16 angeordnet. Die erste Abfuhrleitung 10 dient der Abfuhr eines Diluatstroms P und eines Recyclingstroms R. Die zweite Abfuhrleitung 16 dient der Abfuhr eines Konzentratstroms K.

Die Messeinrichtung 4 kann auch über eine Abzweigungsleitung mit der ersten Abfuhrleitung 10 verbunden sein. Bei der Messeinrichtung 4 handelt es sich um ein Messgerät zur Erfassung eines oder mehrerer Parameter des in dem Deionisationsmodul 1 zumindest teilweise deionisierten Wassers. Bei der Messeinrichtung 4 kann es sich insbesondere um ein Messgerät zur Erfassung der Leitfähigkeit (Leitwert) des Wassers handeln. Im Folgenden wird davon ausgegangen, dass die Messeinrichtung 4 die Leitfähigkeit des Wassers erfasst. Alternativ oder ergänzend kann die Messeinrichtung 4 auch andere Parameter des Wassers erfassen, wie z.B. die gesamte Salzkonzentration, den pH-Wert, das Redoxpotential, die Härte des Wassers und/oder die Konzentration wenigstens eines im Wasser gelösten Ions.

Die erste Abfuhrleitung 10 der Abfuhreinrichtung 15 verzweigt sich an einer Verzweigungsstelle in eine Diluatleitung 5 und eine Recyclingleitung 6, wobei die Recyclingleitung 6 Bestandteil des Leitungskreislaufs 14 ist und die Diluatleitung 5 von dem Leitungskreislauf 14 wegführt. Sowohl in der Diluatleitung 5 als auch in der Recyclingleitung 6 ist jeweils ein Ventil V5 bzw. V6 angeordnet. Die Diluatleitung 5 dient zur Abführung eines Diluatstroms P aus dem Leitungskreislauf 14. Die Recyclingleitung 6 dient zur Rückführung eines Recyclingstroms R durch den Leitungskreislauf 14 in den Zwischenspeicher 3.

Die Messeinrichtung 4 ist mit einer hier nicht dargestellten Steuereinrichtung der Vorrichtung gekoppelt und übermittelt den erfassten Messwert bzw. die erfassten Messwerte an die Steuereinrichtung. Die Steuereinrichtung steuert, in Abhängigkeit des Messwerts bzw. der Messwerte, die Stellung der Ventile V5, V6, V9, V10 und V16.

Der Zwischenspeicher 3 dient zum Zwischenspeichern von nur teilweise deionisiertem Wasser. Der Zwischenspeicher 3 weist im Vergleich zu dem Deionisationsmodul 1 ein wesentlich größeres Aufnahmevolumen auf. Das Aufnahmevolumen des Zwischenspeichers 3 liegt bevorzugt im Bereich von 20 bis 300 l. Das Aufnahmevolumen des Deionisationsmoduls 1 liegt bevorzugt im Bereich von 170 bis 1500 ml. Das Aufnahmevolumen des Deionisationsmoduls 1 ist damit wesentlich kleiner als das Aufnahmevolumen des Zwischenspeichers 3 und liegt bevorzugt im Bereich von 0,05 % bis 10 %, bevorzugt im Bereich von 0,1% bis 1,0 % des Aufnahmevolumens des Zwischenspeichers 3.

Zur Erzeugung von deionisiertem Wasser wird ein Feedstrom F von der Zufuhreinrichtung 2 über die Leitung 9 bei geöffnetem Ventil V9 in den Zwischenspeicher 3 geleitet, bis dieser zu einem oberen Volumenniveau a aufgefüllt ist. Von dort wird das Wasser während einer Diluatproduktionsphase in das Deionisationsmodul 1 eingeleitet und darin zumindest teilweise deionisiert. Dabei liegt an den Elektroden des Deionisationsmoduls 1 (bspw. eines CDI- bzw. eines MCDI-Moduls) während der Diluatproduktionsphase eine elektrische Spannung an, wobei die Anode positiv und die Kathode negativ gepolt ist.

Das in dem Deionisationsmoduls 1 zumindest teilweise deioniserte Wasser wird bei geöffnetem Ventil V10 und geschlossenem Ventil V16 in die erste Abfuhrleitung 10 der Abfuhreinrichtung 15 geleitet. Die Messeinrichtung 4 erfasst die Leitfähigkeit (Leitwert) des eingeleiteten Wassers und übermittelt den erfassten Messwert an die Steuereinrichtung. Die Steuereinrichtung vergleicht den von der Messeinrichtung 4 erfassten Messwert (Leitwert des Wassers) mit einem vorgegebenen Sollwert für die Leitfähigkeit. Wenn der von der Messeinrichtung 4 erfasste Messwerte unterhalb des vorgegebenen Sollwerts der Leitfähigkeit liegt, wird das Wasser bei geöffnetem Ventil V5 und geschlossenem Ventil V6 als Diluatstrom P aus dem Leitungskreislauf 14 ausgeleitet und entweder einem hier nicht dargestellten Diluattank oder unmittelbar einer Verwendung des deionisierten Wassers als Diluat zugeführt.

Wenn der von der Messeinrichtung 4 erfasste Messwert dagegen oberhalb des vorgegebenen Sollwerts für die Leitfähigkeit liegt, wird das nur teilweise deionisierte Wasser bei geschlossenem Ventil V5 und geöffnetem Ventil V6 über die Recyclingleitung 6 durch den Leitungskreislauf 14 zum Zwischenspeicher 3 geleitet und darin zwischengespeichert. Der Zwischenspeicher 3 weist eine Niveaumessung 17 auf, welche das Volumenniveau 7 des im Zwischenspeicher 3 gespeicherten Wassers erfasst. Die Niveaumessung 17 ist mit der Steuereinrichtung gekoppelt und leitet das erfasste Volumenniveau 7 des Wassers im Zwischenspeicher 3 an die Steuereinrichtung weiter.

Das als Recyclingstrom R in den Zwischenspeicher 3 geleitete und dort zwischengespeicherte (teilweise deionisierte) Wasser wird während der Diluatproduktionsphase entweder von der Pumpe 11 oder schwerkraftbedingt, erforderlichenfalls mehrmals im Kreislauf, in das Deionisationsmodul 1 eingeleitet, wo eine (weitere) Deionisation des bereits teilweise deionisierten Wassers erfolgt, bis die Leitfähigkeit des Wassers einen von der Messeinrichtung 4 erfassten Messwert aufweist, der unterhalb des vorgegebenen Sollwerts liegt. Sobald die Leitfähigkeit des Wassers unterhalb des vorgegebenen Sollwerts liegt, gilt das Wasser als vollständig deionisiert und wird von der Abfuhreinrichtung 15 über die Diluatleitung 5 aus dem Leitungskreislauf 14 als Diluatstrom P ausgeleitet. Dadurch wird das Volumen des sich im Zwischenspeicher 3 befindlichen Wassers von dem oberen Niveau a auf ein mittleres Niveau b abgesenkt. Das entsprechende Differenzvolumen (Va - Vb) entspricht somit dem (abgepumpten) Diluatvolumen.

Bevorzugt ist in der Steuereinrichtung ein Grenzwert eines mittleren Volumenniveaus b vorgegeben und die Förderung des Diluatstroms P erfolgt nur so lange, bis der vorgegebene Grenzwert des mittleren Volumenniveaus b unterschritten ist. Wenn der Grenzwert des mittleren Niveaus b erreicht ist, wird die Förderung abgeschaltet. Danach wird dem Leitungskreislauf 14 über die Zufuhreinrichtung 2 wieder ein Feedstrom F von aufbereitetem, insbesondere voll enthärtetem Wasser, zugeführt, um den Zwischenspeicher 3 wieder auf das obere Volumenniveau a aufzufüllen. Das sich nach Auffüllung des Zwischenspeichers 3 darin befindliche Wasser wird anschließend wieder im Recyclingbetrieb, erforderlichenfalls mehrfach, in dem Leitungskreislauf 14 zirkuliert und in dem Deionisationsmodul 1 so lange deionisiert, bis der vorgegebene Sollwert für die Leitfähigkeit unterschritten wird.

Zur Regenerierung des Deionisationsmoduls 1 werden in einer Konzentratproduktionsphase die Ventile V10, V5, V6, V9 und V16 geschlossen und das Deionisationsmodul 1 wird, im Vergleich zur Diluatproduktionsphase, mit umgekehrter Polung der Elektroden betrieben. Dadurch lösen sich die an den Elektroden und/oder Ionenaustauschermembranen des Deionisationsmoduls 1 während der Diluatproduktionsphase angelagerten Ionen, beispielsweise durch Elektro-Desorption, und diffundieren in das Wasser, das sich während der Konzentratproduktionsphase in dem Deionisationsmodul befindet. Während der Konzentratproduktionsphase wird erfindungsgemäß kein Wasser in das Deionisationsmodul 1 geleitet. Während der Konzentratproduktionsphase befindet sich deshalb (nur) das Volumen des Wassers innerhalb des Deionisationsmoduls 1, das auch bereits zu Beginn der Konzentratproduktionsphase in dem Deionisationsmodul 1 enthalten war. Dadurch bedingt wird während der Konzentratproduktionsphase nur das geringe Volumen des Wassers zu einem Konzentrat aufgesalzt, das sich bereits zu Beginn der Konzentratproduktionsphase im Deionisationsmodul 1 befunden hat.

Nach Beendigung der Konzentratproduktionsphase, d.h. nach vollständiger Entfernung der während der Diluatproduktionsphase in dem Deionisationsmodul 1 an den Elektroden bzw. den Ionenaustauschermembranen angelagerten Ionen, wird das während der Konzentratproduktionsphase in dem Deionisationsmodul 1 erzeugte Konzentrat durch die Abfuhrleitung 16 bei geöffnetem Ventil V16 als Konzentratstrom K aus dem Deionisationsmodul 1 abgeführt. Dies erfolgt durch Einleitung von Wasser aus dem Zwischenspeicher 3 in das Deionisationsmodul 1. Durch die schwerkraftbedingte oder durch die Pumpe 11 geförderte Einleitung des Wassers in das Deionisationsmodul 1 wird das sich darin befindliche und während der Konzentratproduktionsphase erzeugte Konzentrat verdrängt und durch die Abfuhrleitung 16 abgeführt.

Die Abführung des Konzentrats aus dem Deionisationsmodul 1 erfolgt dabei zweckmäßig so lange, bis das Konzentrat vollständig aus dem Deionisationsmodul 1 abgeführt worden ist. Hierfür wird das Volumenniveau des Wassers in dem Zwischenspeicher 3 abgesenkt, insbesondere von dem mittleren Niveau b auf ein unteres Niveau c. Der Niveauunterschied Vb - Vc entspricht dabei dem Aufnahmevolumen der Deionisationseinrichtung 1 bzw. dem Volumen des während der Konzentratbildungsphase erzeugten Konzentrats. Sobald das untere Niveau c erreicht ist, wird das Ventil V16 geschlossen.

Nach Abfuhr des Konzentratstroms K aus dem Deionisationsmodul 1 kann eine neue Diluatproduktionsphase eingeleitet werden, indem das Ventil V16 geschlossen und die Ventile 10 und V6 geöffnet und das Deionisationsmodul 1 wieder in umgekehrter Polung der Elektroden, also mit positiv gepolter Anode und negativ gepolter Kathode, betrieben wird. Dabei wird das Wasser, das zum Ausleiten des Konzentrats aus dem Deionisationsmodul 1 verwendet worden ist, zunächst im Deionisationsmodul 1 teilweise deionisiert und über den Leitungskreislauf 14 als Recyclingstrom R wieder zurück in den Zwischenspeicher 3 und von dort zur weiteren Deionisierung in das Deionisationsmodul 1 geleitet.

Erfolgt nach einer Diluatproduktionsphase (in der eine Deionisation bzw. Entsalzung des Wassers erfolgt mit einem erzeugten Diluatvolumen von $V_{Diluat}$ erfolgt) unmittelbar eine Konzentratproduktionsphase (in der eine Konzentraterzeugung mit einem Konzentratvolumen VKonzentrat durch Aufsalzung des im Deionisationsmodul befindlichen Wassers und dadurch eine Regenerierung des Deionisationsmodul erfolgt), so beträgt die Ausbeute A

$$A = V_{Diluat} / ( V_{Diluat} + V_{Konzentrat}), \tag{1}$$

bzw. eine Ausbeute A(%) in Prozent

$$A(\%) = 100 \, (Va-Vb)/((Va-Vb)+( Vb-Vc))) = 100(Va-Vb)/(Va-Vc), \tag{2}$$

wobei Va das obere Volumenniveau, Vb das mittlere Volumenniveau und Vc das untere Volumenniveau ist. Erfolgen nacheinander mehrere Zyklen (n) mit Entsalzungen (Deionisationen) in einer Diluatproduktionsphase vor einer Regenerierung (Konzentratproduktionsphase) ergibt sich eine prozentuale Ausbeute A(%) von

$$A(\%) = 100 \, n(Va-Vb)/ (n(Va-Vb)+(Vb-Vc))) = 100 \, n \, (Va-Vb)/(nVa-nVb+Vb-Vc ) \tag{3}$$

Das Konzentratabfuhrsystem (Abfuhrleitung 16) weist ein möglichst geringes Volumen und geringe Druckdifferenz auf.

Die beschriebene Ausbeutesteuerung über eine Niveau-Regulierung des Zwischenspeichers 3 ermöglicht eine einfache und flexible Anpassung der Ausbeute an verschiedene Salzkonzentrationen (bzw. Löslichkeitsgrenzen) des Speisewassers (Feedstrom F) über das obere Volumenniveau Va und das mittlere Volumenniveau Vb (ggf. auch über das untere Volumenniveau Vc). Das (steuerbare) Volumen der Diluatproduktionsphase, das sich aus der Differenz des oberen Volumenniveaus Va und des mittleren Volumenniveaus Vb, (also Va-Vb) ergibt, bestimmt letztendlich die Aufkonzentrierung in den Kammern und/oder an den Elektroden des Deionisationsmoduls 1 (Formel (3)).

Mit der erfindungsgemäßen Vorrichtung und dem erfindungsgemäßen Verfahren sind hohe Ausbeuten von mehr als 90 %, bevorzugt von mehr als 95% und besonders bevorzugt von mehr als 99 % realisierbar. Um diese hohen Ausbeuten zu erzielen, wird die Volumendifferenz der Volumenniveaus b und c (mittleres und unteres Niveau) Vb - Vc gleich groß oder nur geringfügig größer als das Gerätevolumen (Aufnahmevolumen) des Deionisationsmoduls 1 (z.B. ein CDI-Modul oder ein MCDI-Modul, jeweils mit einer Mehrzahl von Zellen) und deutlich kleiner als das Volumen des Zwischenspeichers 3 gewählt. Die Volumendifferenz der Volumenniveaus b und c (mittleres und unteres Niveau) Vb - Vc sieht dabei neben dem Gerätevolumen (Aufnahmevolumen) des Deionisationsmoduls 1 auch zumindest einen Teil des Volumens der Abfuhrleitung 16 vor. Dadurch können Ablagerungen durch hoch übersättigte Konzentrate bei Abfuhr des Konzentrats unmittelbar nach dem Deionisationsmodul, insbesondere am Ventil V16, vermieden werden.

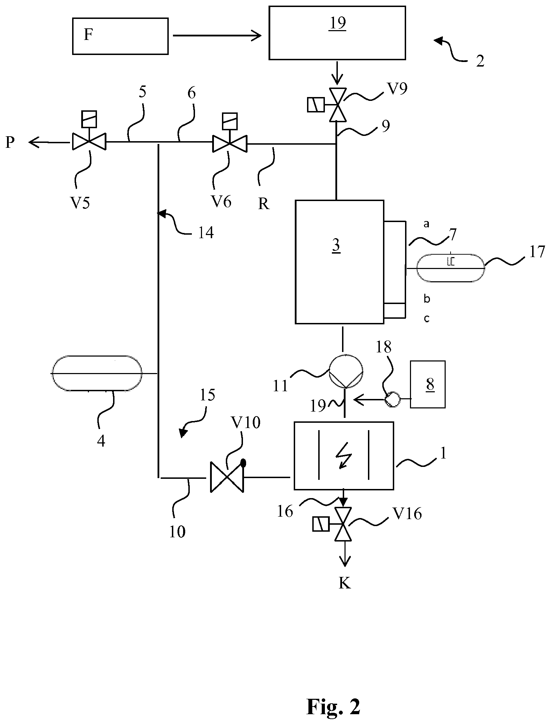

In Figur 2 ist ein zweites Ausführungsbeispiel einer erfindungsgemäßen Vorrichtung zur Deionisation eines Fluids mit darin gelösten Ionen anhand eines Fließschemas gezeigt. Dieses Ausführungsbeispiel der Erfindung eignet sich besonders zur Verwendung in Geschirrspülmaschinen zur salzfreien Deionisierung von Geschirrspülwasser. Die hierfür eingesetzte Vorrichtung entspricht im Wesentlichen der Vorrichtung von Figur 1 und enthält zusätzlich noch eine Dosiereinrichtung 8, mit der während und/oder nach der Konzentratproduktionsphase ein Konditionierungsmittel in das Deionisationsmodul 1 dosiert wird, um Ausfällungen in dem Konzentrat, das während der Konzentratproduktionsphase im Deionisationsmodul 1 gebildet worden ist, zu verhindern. Das Konditionierungsmittel wirkt dabei als Komplexbildner für Metallionen oder -atome und/oder für härtebildende Ionen, insbesondere Calcium- und Magnesiumionen sowie Carbonat-Ionen. Zweckmäßig handelt es sich bei dem Konditionierungsmittel um eine saure, wässrige Lösung, die insbesondere organische Säuren, wie z.B. Zitronen- und/oder Milchsäure und/oder Komplexbildner, insbesondere zur Komplexierung von Calcium- und Magnesiumionen, enthält.

Das Konditionierungsmittel wird während und/oder nach einer Konzentratproduktionsphase mittels der Dosiereinrichtung 8 an einer Dosierstelle 19 in den Leitungskreislauf 14 eindosiert. Hierfür ist eine Dosierpumpe 18 vorgesehen, die das Konditionierungsmittel aus einem Vorratsbehälter zur Dosierstelle 19 pumpt. Die Dosierstelle 19 befindet sich vorzugsweise stromaufwärts des Deionisationsmoduls 1, wie in Figur 2 gezeigt. Durch die Zugabe des Konditionierungsmittels in das Deionisationsmodul 1 wird verhindert, dass Metallionen und härtebildende Ionen als Salze ausfällen und sich im Deionisationsmodul 1 anlagern und dieses dadurch verunreinigen können.

Als Konditionierungsmittel können insbesondere handelsübliche Klarspüler für Geschirrspülmaschinen eingesetzt werden. Das Ausführungsbeispiel der Figur 2 eignet sich dabei besonders zur Verwendung in Geschirrspülmaschinen, weil hier ohnehin ein Klarspüler in das Geschirrspülwasser eindosiert wird, um die Trocknung des Geschirrs in der Geschirrspülmaschine zu verbessern, und hierfür von Zeit zu Zeit ein Klarspülmittel, bspw. als wässrige Lösung, in einen Vorratsbehälter der Geschirrspülmaschine zugegeben wird. Mit der Vorrichtung gemäß dem Ausführungsbeispiel der Figur 2 kann das Geschirrspülwasser in einer Geschirrspülmaschine sehr effizient mit hohen Ausbeuten und salzfrei deionisiert werden. Das Deionisationsmodul 1 ist dabei bevorzugt als MCDI-Modul ausgebildet.

Wenn in das Deionisationsmodul 1 ein Konditionierungsmittel (bspw. ein Klarspüler) zudosiert wird, ist das eindosierte Volumen des Konditionierungsmittels bei der Niveauregulierung 7 in dem Zwischenspeicher 3 zu berücksichtigen. So wird bspw. zum Ausleiten des Konzentrats aus dem Deionisationsmodul 1 nach einer Konzentratproduktionsphase ein etwas höheres Volumen des Wassers benötigt, das aus dem Zwischenspeicher 3 in das Deionisationsmodul 1 abgelassen wird, um das Konzentrat zu verdrängen, weil damit auch das eindosierte Volumen des Konditionierungsmittels durch Verdrängung aus dem Deionisationsmodul 1 entfernt werden muss.

Neben der Deionisation von Geschirrspülwasser können die erfindungsgemäße Vorrichtung und das erfindungsgemäße Verfahren auch für andere Anwendungen eingesetzt werden, wie z.B. für die Deionisation von Schwimmbadwasser.

**Patentansprüche**

1. Vorrichtung zur Deionisation eines Fluids mit darin gelösten Ionen, insbesondere von Wasser, mit wenigstens einem Deionisationsmodul (1), welches zur Deionisation des Fluids in einer Diluatproduktionsphase und zur Regenerierung in einer Konzentratproduktionsphase betreibbar ist, einer Zufuhreinrichtung (2) zum Einleiten eines Feedstroms (F) des Fluids in das wenigstens eine Deionisationsmodul (1), einer Abfuhreinrichtung (15) zum Abführen des zumindest teilweise deionisierten Fluids aus dem Deionisationsmodul (1) als Diluatstrom (P) oder als Recyclingstrom (R) und einer Steuereinrichtung, welche so eingerichtet ist, dass sie das deionisierte Fluid aus dem Deionisationsmodul (1) als Diluatstrom (P) in der Diluatproduktionsphase des Deionisationsmoduls (1) abführt, wenn das deionisierte Fluid einen vorgegebenen Qualitätswert erfüllt, oder andernfalls das nur teilweise deionisierte Fluid aus dem Deionisationsmodul (1) als Recyclingstrom (R) zurück in das Deionisationsmodul (1) leitet, **gekennzeichnet durch** einen mit dem Deionisationsmodul (1) in Verbindung stehenden Zwischenspeicher (3), in den der Recyclingstrom (R) geleitet und zwischengespeichert wird, wobei die Steuereinrichtung so eingerichtet ist, dass sie das Deionisationsmodul (1) zur Regenerierung in der Konzentratproduktionsphase zumindest im Wesentlichen ohne Einleitung von Fluid in das Deionisationsmodul (1) betreibt, so dass das Volumen des während der Konzentratproduktionsphase gebildeten Konzentrats zumindest im Wesentlichen nur dem Volumen des Fluids, das sich bereits zu Beginn der Konzentratproduktionsphase im Deionisationsmodul (1) befunden hat, entspricht, und nach der Konzentratproduktionsphase Fluid aus dem Zwischenspeicher (3) insbesondere stufenweise in das Deionisationsmodul (1) leitet, um das darin während der Konzentratproduktionsphase aufgesalzte Fluid als Konzentratstrom (K) abzuführen.

**2.** Vorrichtung nach Anspruch 1, **gekennzeichnet durch** einen Leitungskreislauf (14), der mit der Zufuhreinrichtung (2) über eine Leitung (9) zur Zuführung des Feedstroms (F) verbunden ist und in dem das Deionisationsmodul (1), die Abfuhreinrichtung (15), der Zwischenspeicher (3) und wenigstens eine Pumpe (11) angeordnet sind.

**3.** Vorrichtung nach einem der voranstehenden Ansprüche, **dadurch gekennzeichnet, dass** die Abfuhreinrichtung (15) eine Messeinrichtung (4) zur Erfassung des Qualitätswerts des aus dem Deionisationsmodul abgeführten Fluids umfasst, wobei es sich bei der Messeinrichtung (4) insbesondere um ein Messgerät zur Erfassung des Leitwerts und/oder der Salzkonzentration, und/oder des pH-Werts, und/oder des Redoxpotentials und/oder der Härte des Fluids und/oder der Konzentration wenigstens eines im Fluid gelösten Ions handelt, und/oder dass die Abfuhreinrichtung (15) mit einer Diluatleitung (5) zur Abführung des Diluatstroms (P) sowie mit einer Recyclingleitung (6) zur Zuführung des Recyclingstroms (R) zum Zwischenspeicher (3) in Verbindung steht.

**4.** Vorrichtung nach Anspruch 2 oder 3, **dadurch gekennzeichnet, dass** die Abfuhreinrichtung (15) mit einer Abfuhrleitung (16) zur Abführung eines Konzentratstroms (K) in Verbindung steht, wobei die Steuereinrichtung so eingerichtet ist, dass sie das während oder nach der Konzentratproduktionsphase aus dem Deionisationsmodul (1) abgeführte Fluid als Konzentratstrom (K) in die Abfuhrleitung (16) leitet.

**5.** Vorrichtung nach einem der voranstehenden Ansprüche, **dadurch gekennzeichnet, dass** das Deionisationsmodul (1) das Fluid elektrochemisch deionisiert und hierfür wenigstens eine Elektrodialysezelle umfasst und/oder als Elektrodeionisationsmodul (EDI), als kapazitives Deionisationsmodul (CDI) oder als membrankapazitives Deionisationsmodul (MCDI) ausgebildet ist.

**6.** Verfahren zur Deionisation eines Fluids, insbesondere von Wasser, wobei ein Feedstrom (F) des Fluids in einer Diluatproduktionsphase in einem Deionisationsmodul (1) durch Entfernung von in dem Fluid gelösten Ionen aus dem Fluid deionisiert und das Deionisationsmodul (1) in einer Konzentratproduktionsphase durch Desorption der Ionen vom Adsorber regeneriert wird und in der Diluatproduktionsphase das deionisierte Fluid aus dem Deionisationsmodul (1) als Diluatstrom (P) abgeführt wird, wenn das deionisierte Fluid einen vorgegebenen Qualitätswert erfüllt, oder andernfalls das nur teilweise deionisierte Fluid aus dem Deionisationsmodul (1) als Recyclingstrom (R) zurück in das Deionisationsmodul (1) geleitet wird, **dadurch gekennzeichnet, dass** der Recyclingstrom (R) in der Diluatproduktionsphase in einen mit dem Deionisationsmodul (1) in Verbindung stehenden Zwischenspeicher (3) geleitet und darin zwischengespeichert wird und dass das Deionisationsmodul (1) in der Konzentratproduktionsphase zumindest im Wesentlichen ohne Einleitung von Fluid in das Deionisationsmodul (1) regeneriert wird, so dass das Volumen des während der Konzentratproduktionsphase gebildeten Konzentrats zumindest im Wesentlichen nur dem Volumen des Fluids, das sich bereits zu Beginn der Konzentratproduktionsphase im Deionisationsmodul (1) befunden hat, entspricht, wobei nach der Konzentratproduktionsphase Fluid aus dem Zwischenspeicher (3), bevorzugt stufenweise, in das Deionisationsmodul (1) geleitet wird, um das darin während der Konzentratproduktionsphase aufgesalzte Fluid als Konzentratstrom (K) abzuführen.

**7.** Verfahren nach Anspruch 6, **dadurch gekennzeichnet, dass** sich während der Konzentratproduktionsphase nur das zu Beginn der Konzentratproduktionsphase im Deionisationsmodul (1) befindliche Volumen des Fluids im Deionisationsmodul (1) befindet.

**8.** Verfahren nach Anspruch 6 oder 7, **dadurch gekennzeichnet, dass** während der Diluatproduktionsphase der Qualitätswert, insbesondere der Leitwert und/oder die Salzkonzentration, und/oder der pH-Wert, und/oder das Redoxpotential und/oder die Härte des Fluids und/oder der Konzentration wenigstens eines im Fluid gelösten Ions, erfasst und mit einem vorgegebenen Grenzwert verglichen wird.

**9.** Verfahren nach Anspruch 8, **dadurch gekennzeichnet, dass** der Diluatstrom (P) während der Diluatproduktionsphase im Batchbetrieb aus dem Deionisationsmodul (1) abgeführt und in einem Diluattank gespeichert oder direkt einer Verwendung des Diluats zugeführt wird, insbesondere wenn der als Obergrenze definierte Grenzwert unterschritten wird oder wenn der als Untergrenze definierte Grenzwert überschritten wird.

**10.** Verfahren nach Anspruch 8, **dadurch gekennzeichnet, dass** während der Diluatproduktionsphase das nur teilweise deionisierte Fluid aus dem Deionisationsmodul (1) als Recyclingstrom (R) zurück in das Deionisationsmodul (1) geführt wird, wenn der als Obergrenze definierte Grenzwert überschritten wird oder wenn der als Untergrenze definierte Grenzwert unterschritten wird.

11. Verfahren nach einem der Ansprüche 6 bis 10, **dadurch gekennzeichnet, dass** während der Diluatproduktionsphase die Abführung des Diluatstroms (P) erfolgt, bis ein vorgegebenes mittleres Volumenniveau (b) im Zwischenspeicher (3) unterschritten wird und/oder dass während der Konzentratproduktionsphase die Abführung des Konzentratstroms (K) aus dem Deionisationsmodul (1) erfolgt, indem das im Zwischenspeicher (3) gespeicherte Volumen des Fluids in das Deionisationsmodul (1) eingeleitet wird, bis ein vorgegebenes unteres Volumenniveau (c) im Zwischenspeicher (3) unterschritten wird.

12. Verfahren nach einem der Ansprüche 6 bis 11, **dadurch gekennzeichnet, dass** während und/oder nach der Konzentratproduktionsphase ein Konditionierungsmittel in das Deionisationsmodul (1) dosiert wird, um Ausfällungen in dem Konzentrat, das während der Konzentratproduktionsphase im Deionisationsmodul (1) gebildet worden ist, zu verhindern, wobei das Konditionierungsmittel als Komplexbildner für Metallionen oder -atome und/oder für härtebildende Ionen, insbesondere Calcium- und Magnesiumionen, wirkt.

13. Verfahren nach Anspruch 12, **dadurch gekennzeichnet, dass** es sich bei dem Konditionierungsmittel um eine saure, wässrige Lösung handelt, die bevorzugt organische Säuren, insbesondere Citronen- und/oder Milchsäure, und/oder Komplexbildner, insbesondere zur Komplexbildung von Calcium- und Magnesiumionen, enthält.

## Claims

1. Device for deionisation of a fluid with ions dissolved therein, in particular of water, having at least one deionisation module (1) which is operable in a diluate production phase for deionisation of the fluid and in a concentrate production phase for regeneration, a supply device (2) for introducing a feed stream (F) of the fluid into the at least one deionisation module (1), a discharge device (15) for discharging the at least partly deionised fluid from the deionisation module (1) as diluate stream (P) or as recycling stream (R) and a control device which is equipped so that it discharges the deionised fluid from the deionisation module (1) as diluate stream (P) in the diluate production phase of the deionisation module (1) if the deionised fluid fulfils a predetermined quality value, or otherwise passes the only partly deionised fluid from the deionisation module (1) as recycling stream (R) back into the deionisation module (1), **characterised by** an intermediate store (3) connected to the deionisation module (1) and into which the recycling stream (R) is passed and temporarily stored, wherein the control device is equipped so that it operates the deionisation module (1) for regeneration in the concentrate production phase at least substantially without introduction of fluid into the deionisation module (1) so that the volume of concentrate formed during the concentrate production phase corresponds at least substantially only to the volume of fluid which has already been found in the deionisation module (1) at the start of the concentrate production phase, and after the concentrate production phase, passes fluid from the intermediate store (3) in particular in stages into the deionisation module (1) in order to discharge the fluid salted therein during the concentrate production phase as concentrate stream (K).

2. Device according to claim 1, **characterised by** a pipe circuit (14) which is connected to the supply device (2) via a pipe (9) to supply the feed stream (F) and in which the deionisation module (1), the discharge device (15), the intermediate store (3) and at least one pump (11) are arranged.

3. Device according to one of the preceding claims, **characterised in that** the discharge device (15) comprises a measuring device (4) for recording the quality value of the fluid discharged from the deionisation module, wherein the measuring device (4) is in particular a measuring device for recording the conductance and/or the salt concentration, and/or the pH value, and/or the redox potential and/or the hardness of the fluid and/or the concentration of at least one ion dissolved in the fluid, and/or **in that** the discharge device (15) is connected to a diluate pipe (5) for discharging the diluate stream (P) and to a recycling pipe (6) for supplying the recycling stream (R) to the intermediate store (3).

4. Device according to claim 2 or 3, **characterised in that** the discharge device (15) is connected to a discharge pipe (16) for discharging a concentrate stream (K), wherein the control device is equipped so that it passes the fluid discharged from the deionisation module (1) during or after the concentrate production phase as concentrate stream (K) into the discharge pipe (16).

5. Device according to one of the preceding claims, **characterised in that** the deionisation module (1) deionises the fluid electrochemically and comprises for this at least one electrodialysis cell and/or is designed as an electrodeionisation module (EDI), as a capacitive deionisation module (CDI) or as a membrane capacitive deionisation module (MCDI).

6. Method for deionisation of a fluid, in particular of water, wherein a feed stream (F) of the fluid is deionised in a deionisation module (1) in a diluate production phase by removing ions dissolved in the fluid from the fluid and the deionisation module (1) is regenerated in a concentrate production phase by desorption of the ions from the adsorber and in the diluate production phase, the deionised fluid is discharged from the deionisation module (1) as diluate stream (P) if the deionised fluid fulfils a predetermined quality value, or otherwise the only partly deionised fluid is passed from the deionisation module (1) as recycling stream (R) back into the deionisation module (1), **characterised in that** the recycling stream (R) in the diluate production phase is passed into an intermediate store (3) connected to the deionisation module (1) and temporarily stored therein and **in that** the deionisation module (1) in the concentrate production phase is regenerated at least substantially without introduction of fluid into the deionisation module (1) so that the volume of concentrate formed during the concentrate production phase corresponds at least substantially only to the volume of fluid which has already been found in the deionisation module (1) at the start of the concentrate production phase, wherein after the concentrate production phase, fluid from the intermediate store (3), preferably in stages, is passed into the deionisation module (1) in order to discharge the fluid salted therein during the concentrate production phase as concentrate stream (K).

7. Method according to claim 6, **characterised in that** during the concentrate production phase, only the volume of fluid found in the deionisation module (1) at the start of the concentrate production phase is found in the deionisation module (1).

8. Method according to claim 6 or 7, **characterised in that** during the diluate production phase, the quality value, in particular the conductance and/or the salt concentration, and/or the pH value, and/or the redox potential and/or the hardness of the fluid and/or the concentration of at least one ion dissolved in the fluid, is recorded and compared with a predetermined limiting value.

9. Method according to claim 8, **characterised in that** the diluate stream (P) during the diluate production phase in batch operation is discharged from the deionisation module (1) and stored in a diluate tank or supplied directly to a use of the diluate, in particular if the limiting value defined as the upper limit is not reached or if the limiting value defined as the lower limit is exceeded.

10. Method according to claim 8, **characterised in that** during the diluate production phase, the only partly deionised fluid is passed from the deionisation module (1) as recycling stream (R) back into the deionisation module (1) if the limiting value defined as the upper limit is exceeded or if the limiting value defined as the lower limit is not reached.

11. Method according to one of claims 6 to 10, **characterised in that** during the diluate production phase, discharge of the diluate stream (P) is effected as long as a predetermined average volume level (b) in the intermediate store (3) is not reached and/or **in that** during the concentrate production phase, discharge of the concentrate stream (K) from the deionisation module (1) is effected **in that** the volume of fluid stored in the intermediate store (3) is introduced into the deionisation module (1) as long as a predetermined lower volume level (c) in the intermediate store (3) is not reached.

12. Method according to one of claims 6 to 11, **characterised in that** during and/or after the concentrate production phase, a conditioning agent is metered into the deionisation module (1) in order to prevent depositions in the concentrate which has been formed in the deionisation module (1) during the concentrate production phase, wherein the conditioning agent acts as a complex former for metal ions or metal atoms and/or for hardness-causing ions, in particular calcium ions and magnesium ions.

13. Method according to claim 12, **characterised in that** the conditioning agent is an acid, aqueous solution which preferably contains organic acids, in particular citric acid and/or lactic acid, and/or complex formers, in particular for forming complexes of calcium ions and magnesium ions.

**Revendications**

1. Dispositif de déionisation d'un fluide avec des ions dissous dedans, en particulier d'eau, avec au moins un module de déionisation (1) qui peut être actionné pour la déionisation du fluide dans une phase de production de diluat et pour la régénération dans une phase de production de concentrât, un dispositif d'alimentation (2) pour l'introduction d'un courant d'alimentation (F) du fluide dans l'au moins un module de déionisation (1), un dispositif d'évacuation (15) pour l'évacuation du fluide au moins partiellement déionisé du module de déionisation (1) en tant que courant de diluat (P) ou en tant que courant de recyclage (R) et un dispositif de commande, qui est aménagé de sorte qu'il évacue le fluide déionisé du module de déionisation (1) en tant que courant de diluat (P) dans la phase de production de diluat du module de déionisation (1) lorsque le fluide déionisé remplit une valeur de qualité prédéfinie, ou sinon le fluide seulement partiellement déionisé est conduit hors du module de déionisation (1) en tant que courant de recyclage (R) de nouveau dans le module de déionisation (1), **caractérisé par** un réservoir intermédiaire (3) se trouvant en liaison avec le module de déionisation (1) dans lequel le courant de recyclage (R) est conduit et entreposé, dans lequel le dispositif de commande est aménagé de sorte qu'il actionne le module de déionisation (1) pour la régénération dans la phase de production de concentrat au moins sensiblement sans introduction de fluide dans le module de déionisation (1) de sorte que le volume du concentrat formé pendant la phase de production de concentrat corresponde au moins sensiblement seulement au volume du fluide qui s'est déjà trouvé au début de la phase de production de concentrat dans le module de déionisation (1), et après la phase de production de concentrat du fluide est conduit hors du réservoir intermédiaire (3) en particulier progressivement dans le module de déionisation (1) afin d'évacuer le fluide salé dedans pendant la phase de production de concentrat en tant que courant de concentrat (K).

2. Dispositif selon la revendication 1, **caractérisé par** un circuit de conduite (14) qui est relié au dispositif d'alimentation (2) par une conduite (9) pour l'alimentation du courant d'alimentation (F) et dans lequel le module de déionisation (1), le dispositif d'évacuation (15), le réservoir intermédiaire (3) et au moins une pompe (11) sont agencés.

3. Dispositif selon l'une des revendications précédentes, **caractérisé en ce que** le dispositif d'évacuation (15) comporte un dispositif de mesure (4) pour la détection de la valeur de qualité du fluide évacué hors du module de déionisation, dans lequel il s'agit pour le dispositif de mesure (4) en particulier d'un appareil de mesure pour la détection de la valeur de conduite et/ou de la concentration en sel, et/ou de la valeur de pH, et/ou du potentiel Redox et/ou de la dureté du fluide et/ou de la concentration au moins d'un ion dissous dans le fluide, et/ou que le dispositif d'évacuation (15) est en liaison avec une conduite de diluat (5) pour l'évacuation du courant de diluat (P) ainsi qu'avec une conduite de recyclage (6) pour l'alimentation du courant de recyclage (R) au réservoir intermédiaire (3).

4. Dispositif selon la revendication 2 ou 3, **caractérisé en ce que** le dispositif d'évacuation (15) est en liaison avec une conduite d'évacuation (16) pour l'évacuation d'un courant de concentrat (K), dans lequel le dispositif de commande est aménagé de sorte qu'il conduise le fluide évacué pendant ou après la phase de production de concentrat hors du module de déionisation (1) en tant que courant de concentrat (K) dans la conduite d'évacuation (16).

5. Dispositif selon l'une des revendications précédentes, **caractérisé en ce que** le module de déionisation (1) déionise le fluide par voie électrochimique et à cet effet comporte au moins une cellule d'électrodialyse et/ou est réalisé en tant que module d'électrodéionisation (EDI), en tant que module de déionisation capacitif (CDI) ou en tant que module de déionisation à membrane capacitive (MCDI).

6. Procédé de déionisation d'un fluide, en particulier d'eau, dans lequel un courant d'alimentation (F) du fluide est déionisé dans une phase de production de diluat dans un module de déionisation (1) par retrait d'ions dissous dans le fluide hors du fluide et le module de déionisation (1) est régénéré dans une phase de production de concentrât par désorption des ions par l'adsorbeur et dans la phase de production de diluat le fluide déionisé est évacué hors du module de déionisation (1) en tant que courant de diluat (P), lorsque le fluide déionisé satisfait à une valeur de qualité prédéfinie, ou sinon le fluide seulement partiellement déionisé est conduit hors du module de déionisation (1) en tant que courant de recyclage (R) de nouveau dans le module de déionisation (1), **caractérisé en ce que** le courant de recyclage (R) est conduit dans la phase de production de diluat dans un réservoir intermédiaire (3) se trouvant en liaison avec le module de déionisation (1) et est entreposé dedans et que le module de déionisation (1) est régénéré dans la phase de production de concentrat au moins sensiblement sans introduction de fluide dans le module de déionisation (1) de sorte que le volume du concentrat formé pendant la phase de production de concentrat corresponde au moins sensiblement seulement au volume du fluide qui s'est déjà trouvé au début de la phase de production de concentrat dans le module de déionisation (1), dans lequel après la phase de production de concentrât du fluide est conduit hors du réservoir intermédiaire (3) de préférence progressivement, dans le module de déionisation (1) afin d'évacuer le fluide salé dedans pendant la phase de production de concentrat en tant que courant de concentrat (K).

7. Procédé selon la revendication 6, **caractérisé en ce que** pendant la phase de production de concentrat seul le volume se trouvant au début de la phase de production de concentrat dans le module de déionisation (1) du fluide se trouve dans le module de déionisation (1).

8. Dispositif selon la revendication 6 ou 7, **caractérisé en ce que** pendant la phase de production de diluat, la valeur de qualité, en particulier la conductance et/ou la concentration en sel, et/ou la valeur de pH et/ou le potentiel Redox et/ou la dureté du fluide et/ou la concentration au moins d'un ion dissous dans le fluide, est détectée et est comparée avec une valeur limite prédéfinie.

9. Procédé selon la revendication 8, **caractérisé en ce que** le courant de diluat (P) est évacué pendant la phase de production de diluat par lots hors du module de déionisation (1) et est stocké dans un réservoir de diluat ou est amené directement à une utilisation du diluat, en particulier lorsque la valeur limite définie en tant que limite supérieure n'est pas atteinte ou lorsque la valeur limite définie en tant que limite inférieure est dépassée.

10. Procédé selon la revendication 8, **caractérisé en ce que** pendant la phase de production de diluat le fluide seulement partiellement déionisé est guidé du module de déionisation (1) en tant que courant de recyclage (R) de nouveau dans le module de déionisation (1), lorsque la valeur limite définie en tant que limite supérieure est dépassée ou lorsque la valeur limite définie en tant que limite inférieure n'est pas atteinte.

11. Procédé selon l'une des revendications 6 à 10, **caractérisé en ce que** pendant la phase de production de diluat l'évacuation du courant de diluat (P) est effectuée, jusqu'à ce qu'un niveau de volume (b) médian prédéfini ne soit pas atteint dans le réservoir intermédiaire (3) et/ou que pendant la phase de production de concentrat l'évacuation du courant de concentrat (K) du module de déionisation (1) est effectuée, **en ce que** le volume stocké dans le réservoir intermédiaire (3) du fluide est introduit dans le module de déionisation (1) jusqu'à ce qu'un niveau de volume inférieur (c) prédéfini ne soit pas atteint dans le réservoir intermédiaire (3).

12. Procédé selon l'une des revendications 6 à 11, **caractérisé en ce que** pendant et/ou après la phase de production de concentrat un moyen de conditionnement est dosé dans le module de déionisation (1) afin d'empêcher des précipitations dans le concentrat qui a été formé pendant la phase de production de concentrât dans le module de déionisation (1), dans lequel le moyen de conditionnement agit en tant que formateur complexe pour des ions ou atomes métalliques, et/ou pour des ions de formation de dureté, en particulier des ions de calcium et magnésium.

13. Procédé selon la revendication 12, **caractérisé en ce qu'**il s'agit pour le moyen de conditionnement d'une solution aqueuse acide qui contient de préférence des acides organiques, en particulier de l'acide citrique et/ou lactique, et/ou des formateurs complexes, en particulier pour la formation complexe d'ions de calcium et de magnésium.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 106830227 A
- US 20120298153 A1
- DE 102012212638 A1
- EP 2739573 B1